# EUROPEAN PATENT SPECIFICATION

(11) **EP 4 588 207 B1**
(45) Date of publication and mention of the grant of the patent: **15.07.2026**
(21) Application number: 23783032.8
(22) Date of filing: 14.09.2023
(51) Int. Cl.: H04L 9/00

(54) **METHOD FOR SHARING ONE OR MORE CYBERPHISICAL ASSETS/EQUIPMENT WHICH REMAIN PERSISTENT AND RESPONSIVE IN THEIR REAL-WORLD AND VIRTUAL REPRESENTATIONS WHEN INTEGRATED INTO REAL OPERATIONAL CONTEXTS AND INTEROPERABLE METAVERSES**
VERFAHREN ZUR GEMEINSAMEN NUTZUNG VON CYBERPHISISCHEN GÜTERN/GERÄTEN MIT PERSISTENTEM UND REAGIERENDEM ECHTZEIT- UND VIRTUELLEM REPRÄSENTATIONS
PROCÉDÉ DE PARTAGE D'UN OU DE PLUSIEURS ACTIFS/ÉQUIPEMENTS CYBERPHYSIQUES RESTANT PERSISTANTS ET RÉACTIFS LORS DE LEURS REPRÉSENTATIONS VIRTUELLES ET EN MONDE RÉEL ET LORSQU'INTÉGRÉS DANS DES CONTEXTES DE FONCTIONNEMENT RÉEL ET DE MÉTAVERS INTEROPÉRABLES

(30) Priority: 14.09.2022 IT 202200018822
(43) Date of publication of application: 23.07.2025
(73) Proprietor: Knowhedge S.r.l., 16149 Genova (GE) (IT)
(72) Inventor: CARDINALI, Fabrizio, 16149 Genova (GE) (IT)
(74) Representative: Bottino, Giovanni
(86) International application number: PCT/IB2023/059148
(87) International publication number: WO 2024/057259

(56) References cited:
- CN-A- 114 266 576
- CN-A- 115 002 130
- KR-B1- 102 440 745
- QUE PEISI ET AL: "The Current Situation and Prospect of the Development of Metaverse Technology", 2022 4TH INTERNATIONAL CONFERENCE ON APPLIED MACHINE LEARNING (ICAML), IEEE, 23 July 2022 (2022-07-23), pages 1 - 5, XP034304679, DOI: 10.1109/ICAML57167.2022.00089

## Description

The present invention relates to a method for the creation of cyber physical equipment that is capable of automatically aligning its data and operating states while operating in real and virtual worlds (metaverses) through the persistent and responsive alignment of data coming from the real world with the representation and the stateful operation of the digital twins operating in one or more virtual metaverses. In particular, the present invention relates to a method for sharing one or more cyber physical assets and/or equipment (Cyber Physical Asset, CPA, or Cyber Physical Equipment, CPE), which cyber physical assets and/or equipment consist of at least one real object and at least one virtual representation thereof in connection with each other.

With the spread of the Internet of Things (IoT) technology, the digital twins (DT) techniques have gained increasing importance in recent times. Thanks to the different animation techniques and to the excellent ability to create virtual environments and equipment guaranteed by virtual reality software, the spread of digital twins has been a great success in the industrial field for design, maintenance and training purposes. However, apart from a few cases like the one of BIM for building models, the virtual reconstruction of the digital twins of equipment to date guarantees poor portability between different virtual reality environments and above all its insertion and alignment with the data and the state of the real model needs ad hoc integrations, each time recreated, and often limited to mono-directional data flows (from the real world to the digital twin). In summary, to date there is no method capable of correlating the real object with its digital copy in a univocal, interoperable, portable and real-time way. With the advent of the Metaverse, originally conceived in the cyberpunk novel "Snow Crash" by Neal Stephenson in 1992 and made popular by the announcement of the change of name from Facebook^{™} to Meta^{™}, the need to transport virtual objects among "virtual worlds" of various manufacturers with heterogeneous formats and software has suddenly exploded, focusing however above all on the portability of models from one virtual world to another thanks also to the use of new technologies of the DLT (Distributed Ledger Technologies) world capable of buying and selling natively digital objects with fungible tokens (e.g. crypto currencies of the Bitcoin^{™} or Ethereum^{™} type), while identifying at the same time their property in an equally deterministic way with NFTs (Non Fungible Tokens) and treating their purchase and sale with smart contracts that are indissolubly linkable to the objects that can be purchased and/or exchanged in the various Metaverse in turn equipped with virtual places of purchase and interchange such as virtual shops, supermarkets and/or trade fairs.

Therefore, these models are only connected to the digital counterpart with no persistent and responsive correlation with a similar twin operating in the real world.

At most, when it is wished to correlate said virtual object with specific positions in the real world, there is the possibility of superimposing the digital object on specific coordinates in the real world and possibly also on the real instance of the object. However, this possibility is to date still limited to the possibility of univocally identifying and aligning the objects in the two representations, real and virtual, but there is no general method to guarantee the persistence, responsiveness and interoperability of the two twins between them. **It** therefore turns out to be necessary to manage to guarantee a univocal match of the object in the real and virtual worlds, its continuous monitoring but also the semantic definition of its operation in order to align the possible states thereof continuously between the two worlds, finally guaranteeing its portability in contexts, workflows and even heterogeneous production processes in which it is necessary to maintain the alignment of the operations involving the object and its driving and operating data both in the real and virtual world.

Moreover, to date, if a digital twin leaves one virtual world to enter another, it must be reconnected to the flows of the real world so as not to be misaligned with respect to the object of which it is a representation. Likewise, if a real object changes location in the real world in new flows and functional states, it must be reattached to the digital twin of representation in the new virtual world in order to become operational again in the two worlds, passing through a set of reconfiguration and alignment steps typically performed by system integrators that are expert in the individual proprietary environments and the related representation, animation and IoT integration protocols used.

Document KR 102 440 745 B1 describes a method for providing an NFT-based service applied to a metaverse space, particularly for providing the service related to a content such as a sound source and the like based on the NFT in the metaverse space, and comprises a step of generating an NFT ID, a step of determining the rating for an NFT, and a step of applying a protection procedure for the NFT.

Document CN 114 266 576 A concerns a metaverse digital resource transaction system. The transaction system comprises an asset authentication unit, a user authentication unit, an asset rights confirmation unit, and an asset circulation unit. The resource authentication unit performs a confirmation step on a virtual object in the metaverse system and generates an authentication record, so that each virtual object that can be authenticated as a digital resource in the metaverse system has the authentication record; the right confirmation unit is used to confirm the right on the virtual object so as to determine the property of the virtual object; and the resource circulation unit is used to connect a provider and a requester of the digital resources and transfer the property of the digital resources in a transaction mode approved by the provider and the requester. Through the transaction system, the metaverse system can provide stand-alone transaction scenarios, the metaverse user can select any virtual object to start the transaction query, and the user's transaction requirements are met through the processing of the transaction system.

Document CN 115 002 130 A describes an application method for building a personal digital twin DID based on blockchain. The basic structure comprises a DID scheme, a DID method identifier, a DID specific identifier, the DID points at a DID main body, the DID can be analysed in a DID document, the DID and the DID document are recorded on a verifiable data register contract on a blockchain, and the DID document is controlled by a DID controller; an information aggregation account from multiple sources based on a DID is created, and the user information distributed across all mechanisms and platforms are integrated together. Through the merging of the NFT and DID blockchain technologies, a user is supported in binding a DID with any NFT they own and is helped create a unified digital identity in a metaverse and, in the meantime, the concreteness of an abstract DID digital identity is realized.

These documents relate to typical NFT objects such as music tracks, paintings, works of art and do not take into account the problems related to equipment or even more generally an IoT device equipped with sensors and actuators.

The present THE CYPREME method proposes an effective solution to satisfactorily remedy the technological and practical limitations highlighted above, thus representing a significant improvement compared to the current context.

The present invention therefore aims to overcome the drawbacks encountered in the state of the art by the method described at the beginning, in which the connection between the real object and its virtual representation is made through the use of a real semantic twin, consisting of a semantic representation of the real object, and of a virtual semantic twin, consisting of a semantic representation of the virtual representation, the real semantic twin and the virtual semantic twin being adapted to represent respectively the state and the operational data of the real object and of its virtual representation, in such a way that said cyber physical assets and/or equipment are univocally identifiable, transposable and interoperable between real worlds and one or more metaverses maintaining in the transposition univocal characteristics of identity, property, persistence and responsiveness between real object and virtual representation, in which a connection of control parameters of the virtual semantic twin to the control data of one or more IoT sensors and/or actuators present in the real object and made accessible by the real semantic twin is provided.

Preferably, each cyber physical asset or equipment (Cyber Physical Asset, CPA, or Cyber Physical Equipment, CPE,) is configured to:
a) Guarantee the uniqueness and the property of both the digital twin and of the real twin of the CPA/CPE respectively in the real world and in one or more metaverses by means of univocal marking obtained by integrating a non-fungible token (NFT) with IoT technologies of univocal identification of the physical object (for example and not exclusively through the use of a Root of Trust (capable of univocally and unchangeably certifying the identity of the object) of Hardware or Firmware type such as TPM, Trusted Platform Module, or TEE, Trusted Executed Environment, and/or QRCode, RFID tags integrating univocal code associated with the HW components of the system e.g. MAC et al.).
b) To have the operating data and operating states coming from real-world sensors, actuators and orchestrators persist with "upstream" data flows that automatically align states and values assumed by the digital twin of the CPA/CPE included in one or more third-party metaverses. This "upstream" alignment takes place through the collection of data flows and equipment states of the real twin collected using external or internal sensors interconnected by means of semantic standards for the description and the interoperability of equipment data (such as for example and not exclusively the "information" and "monitoring" sections of the OPC UA (Unified Architecture) specification relative Companion Specification published by the OPC Foundation^{™} able to monitor states and information related to real equipment and robots through dedicated specifications such as the specification OPC UA equipment Tools and/o Robotics, or other similar semantic ontologies used in different real professional scenarios for example and not exclusively to describe the context of operation and use of objects, equipment and machinery for smart cities, biomedical and industrial field, such as for example the WOT specification, Web of Things, of the World Wide Web Consortium^{™} W3C or NGSI-LD of the European Telecommunications Standardization Institute^{™}, ETSI) and then reflect these data and states in the formalisms of representation and animation of the 3D models in the metaverses using also in this case specific and standard protocols for the description and the interoperability of 3D models (such as for example and not exclusively the gIFT format released by the Kronos Group^{™} which brings together the main reference stakeholders for the creation, the animation and the management of 3D graphics and metaverses).
c) Respond to virtual stresses coming from virtual sensors, actuators and orchestrators present in one or more third-party metaverses by aligning in real time the data and the states assumed by the real twin of the CPA/CPE in the real world through a mechanism reverse to that described in (b) and in which any interaction with data modification and states of the CPA/CPE in the metaverse are brought back to the real world through integration with physical sensors and actuators described with open and interoperable semantic standards similar to those used in point (b) above but with "downstream" flows to remotely command and influence the real objects through data and state changes that occurred in the metaverses. This "downstream" alignment takes place through the collection of data flows and equipment states of the virtual twin collected using actuator or orchestrator sensors in the metaverses interconnected by semantic standards for the description and interoperability of equipment data (such as for example and not exclusively the "production" section of the OPC UA (Unified Architecture) specification relative Companion Specification published by the OPC Foundation^{™} able to modify states and information of real equipment and robots through dedicated specifications such as the OPC UA equipment Tools and/or Robotics specification, or other similar semantic ontologies used in different real professional scenarios.
d) Maintain the characteristics (a) (b) (c) expressed above also by migrating through real and metaverse worlds through open semantic interoperability mechanisms able to package and describe each CPA/CPE object with its streaming and data alignment mechanisms and machine states in transport mechanisms in a standardized and open way such as for example and not exclusively the conceptualization of Industry 4.0 Asset Administration Shell (I4AAS) realized in the context of the German initiative Industry 4.0 with the aim of exchanging data related to CPA/CPE among different operational contexts and among contexts and production orchestration systems or engineering tools used both in the real world and in the metaverses.
e) Be included in digital marketplaces for the purchase and sale and interchange of CPA/CPE and related services that respect the characteristics (a), (b), (c), (d) above and that offer mechanisms for the purchase and sale of services associated with the individual CPA/CPE (servitization) both in the real and virtual twin. The alignment mechanisms (for example and not exclusively API libraries, Application Programming Interfaces, Web Services, Containerization) packaged with the CPA/CPE object purchased in the "THE CYPREME" marketplace must guarantee complete portability and operation in real and virtual third-party environments that intend to integrate the CPA/CPEs served by the method to use and interlink them for example and not exclusively with maintenance, training, insurance, financing, artificial intelligence etc.

In this patent application, the terms "cyber physical asset" and "cyber physical equipment" refer to any object and/or equipment, existing both in the real world and in the virtual world, both in professional fields (e.g. Smart Cities, Industry 4 and Biomedical) and consumer where said object and/or equipment is provided with the characteristics (a)-(d) described above can be marketed both in the real and virtual world of the various metaverses on the current or future market by accessing the marketplace referred to in point (e) above.

By convention, from now on reference will be made to CPE (Cyber Physical Equipment) in the sense set out above to include both objects and professional or consumer apparatuses and equipment.

The term "real world", in this patent application, refers to any environment, or space, open and/or closed, tangibly existing in the reality in which said CPE is active and sensed in the reference environment by means of pre-existing internal or external sensors added, in a fixed and/or moving position. According to a purely descriptive and non-limiting form, the term "environment" can refer to a factory, hospital, port or other environment in which the CPE will be operating in its real version.

In this patent application, the term "metaverse" or "metaverses" refers to any environment, or virtual or augmented reality space, 2D or 3D, in which said CPE is active and manipulatable in the virtual environment of reference, in a fixed and/or moving position. According to a purely descriptive and non-limiting form, the term "environment" can refer to a reconstruction of the real environment of the factory, hospital, port or other environment in which the CPE will be operating both in its real version, or Real Equipment (RE), and in the virtual version, or Virtual Equipment (VE).

The persistence and responsiveness of the method implies both that the virtual twin is animated and controlled by the real one thanks to the parameters that come from the IoT sensors of the real twin but also vice versa that the real twin is controllable by acting on the virtual twin which in turn commands the actuators of the real twin, for example remotely.

In an embodiment example, said control parameters of the virtual semantic twin are control parameters of animations and/or state and/or environmental and operational context.

In an embodiment example, the univocal and interchangeable identification of the real and virtual semantic twins of a cyber physical asset and/or equipment is carried out by using a digital identity method self-managed by the cyber physical asset or equipment itself, which digital identity method comprises a security double key encryption mechanism in which the private key is obtained by securely exposing a hardware or firmware Root of Trust, to guarantee the possibility of univocal, natively secure and reliable identification of the cyber physical asset or equipment.

In a further embodiment example said private key consists of a univocal HW key inserted in one or more microcontrollers physically engaged in the real object and not disconnectable therefrom or emulated on an FPGA or a microcontroller present in the real object in such a way that the private key is accessible and securely exposed both in the real semantic twin and in the virtual semantic twin.

According to a further embodiment example, the univocal identification and the property of the cyber physical asset or equipment is recorded and managed in decentralized mode without the presence of centralizing enabling and synchronizing authority of the method, by recording the public key of said security double key encryption mechanism in a distributed DLT.

According to one embodiment, said distributed DLT is used for the registration of a proprietary Non Fungible Token associated with the public key of the cyber physical asset or equipment, which Non Fungible Token is able to univocally confirm the property of the cyber physical asset or equipment also in pre-existing international circuits and transactions using NFT.

In a further embodiment, said digital identity method and said DLT are used to implement methods for verification, access and provisioning of digital services, capable of providing a plurality of mechanisms adapted to demonstrate the property and the control of the cyber physical asset or equipment to those who intend to offer a service to the cyber physical asset or equipment and adapted to enable reliable interactions to the cyber physical asset or equipment both in the real world and in one or more of said Metaverses in which the cyber physical asset or equipment is operating, in order to offer value-added services for the interlinked cyber physical assets or equipment, and wherein the data certified by said DLT are also accessible by one or more distributed applications to verify and certify the operating data of both the real semantic twin in the real world and of the virtual semantic twin in the Metaverse.

According to an embodiment example, the services provided are closely correlated to the univocally identified cyber physical asset or equipment and are adapted to monitor and control the interactions of the cyber physical asset or equipment both in the real world and in the Metaverse and possibly to formalise and transact the services using Smart Contracts and cryptocurrencies connected to said DLT.

According to a further embodiment example, the interactions with the real semantic twin and the virtual semantic twin necessary to provide said services are carried out by an automatic coupling of said semantic twins by means of schemes, interfaces and information communication protocols between the real world and the Metaverses in which the real semantic twin and the virtual semantic twin are used and/or immersed.

In one embodiment, said coupling between the real semantic twin and the virtual semantic twin is obtained by maintaining the persistence and responsiveness requirements of the method by means of said connection of control parameters of animations, state and environmental and operational context of the virtual semantic twin to the control data of said one or more IoT sensors and/or actuators, preferably a plurality of IoT sensors and actuators, present in the real object and made accessible by the real semantic twin.

According to one embodiment, the coupling between the real semantic twin and the virtual semantic twin is carried out through the interchange of data packets describing the cyber physical asset or equipment, which data packets are open and interoperable in such a way as to guarantee the loading, the activation and the interoperability among different compatible software and used to manage the cyber physical assets and/or equipment in the real worlds and in the Metaverses compatible with the format and the protocols included in said data packets.

In a further embodiment, the data packages are sold, bought and exchanged by associating them with the real object or with the 3D model of the CPA and CPE respectively by combining them with the real physical object RE at the time of sale in shops or real exhibitions or by combining them with the virtual twin VE at the time of sale in shops or virtual exhibitions that can be activated in one or more Metaverses, guaranteeing their uniqueness, property, interoperability, portability, persistence and responsiveness according to the "THE CYPREME" method object of the present invention.

In an embodiment example, said data packets are archived on a decentralized file system whose access, authentication and authorization key is saved on said distributed DLT univocally coupled to the holder of the NFT and/or of other mechanisms that allow authorized access to the digital identity of the CPA or CPE.

In an embodiment example, said data packets are archived alternatively on a central online database whose access, authentication and authorization key is univocally coupled to the holder of the NFT and/or of other mechanisms that allow authorized access to the digital identity of the CPA or CPE.

According to one embodiment, said RE comprises at least one automatically identifiable recognition tag both in proximity (for example and not exclusively radio frequency tags, or RFID) or by proximity scanning capable of collecting and transmitting data that univocally identifies the CPE through FW modules or HW chips serving as Root of Trust (such as for example and not exclusively TPM chips or processors with TEE area).

According to one embodiment, said VE comprises formalisms that allow it to modify operation and measurement data and at least a rendering and animation formalism that allows it to drive notable points such as joints, axes and/or specific components based on IoT flows coming from real sensors coupled to the corresponding RE (for example and not exhaustively GPS localization, accelerometers, magnetometers).

Advantageously, the method subject-matter of this patent application provides for the possibility of identifying, joining and synchronizing between them the two CPE components, RE and VE, in real time, through:
a) the Issue of a digital identity (DI) identification mechanism that allows the univocal marking in the real and virtual world of the CPE in its two components VE and RE, supporting the purchase, sale, transferability and/or purchase of services aimed at the digital and/or real twin of the CPE.
b) Coupling both in the RE and VE component of the CPE to its semantic description that elicits informative, monitoring and operating components expressed according to standard machine readable and interoperable description formalisms using standard languages and protocols such as for example and not exclusively XML, RDF or Json.

Advantageously, said method subject-matter of the present patent application exploits according to one of its embodiments for the implementation of point (a) above the TMP specifications of the Trusted Computing Group together with the encryption mechanisms for the registration of NFTs, Dls and data on IOTA type distributed DLT of the IOTA Foundation for example and not exclusively by means of a double key security mechanism in which the private key is natively integrated into HW or FW mechanisms that act as Root of Trust, for example on TPM type chips or processors with TEE area inserted on board the RE during manufacture or, possibly by retrofitting the artefact, by adding cards containing chips with TPM programs on HW or FPGA or, possibly by means of a private key generation mechanism created by local microcontroller using univocal machine data such as for example and not exclusively the MAC Address of motherboards and/or other HW circuits on the real twin RE of the CPE, and in the encrypted code of the 3D model of the EV and the public key is recorded and exchanged on a dedicated DLT "THE CYPREME DLT" allowing to regulate access to both the VE and RE twin of the CPE through Smart Contracts able to verify this univocal identity and carry out cryptocurrency transactions for the transfer of property and/or purchase of digital and/or real services with interlink to the CPE, possibly with the addition of NFT tokens for property transactions where required.

Furthermore, according to one embodiment, the implementation of point (b) above uses the standard formalisms of the Companion Specification released by the OPC UA Foundation which adopted an XML formalism for the description of the Information, Production and Monitoring components of the twin machine components RE of the CPE in conjunction with the gITF (Graphic Language Transport Format) specifications of the Kronos group which adopted an XML formalism for the description of the display (rendering), animation and texture components applicable to CPE VE modelling.

In addition, said method subject-matter of this patent application exploits according to one of its embodiments for the implementation of the "THE CYPREME DLT" the IOTA DLT by the IOTA Foundation which combines the possibility of IoT data marking on the DAG (Direct Acyclic Graph) type notarizing blockchain with the possibility of using crypto currency for payments (MIOTA), Smart Contract contractualisation (Ethereum Type) and release of Digital Identities and NFT certificates allowing the marking, purchase and sale and exchange of certificates owned by the RE and VE twins of the CPE according to the method presented.

In addition, said method subject-matter of this patent application exploits according to one of its embodiments for the implementation of "THE CYPREME MAREKTPLACE" on DLT IOTA the concept Industry 4.0 Asset Administration Shell (14AAS) in its technological implementation made by OPC UA FOUNDATION to allow the packaging and the transport between real worlds and different metaverses of the CPE made, exhibited and purchased in the Metaverse and Real World shops according to the method set forth in the patent.

Finally, the method subject-matter of this patent application exploits according to one of its embodiments for saving data packets associated with the CPA or CPE a central database called "THE CYPREME CLOUD" whose access key is coupled to the authorization and authentication system of the CPA or CPE Digital Identity or alternatively a distributed storage system in which the data, in the event that they are not directly saveable in the DLT, are saved on a distributed file system network of the IPFS (Inter Planetary File System) type associated with the DLT and whose authentication and authorization access keys are in turn saved on the "THE CYPREME DLT" in turn accessible as described above.

These and other features and advantages of the present invention will become clearer from the following disclosure of some embodiment examples illustrated in the accompanying drawings in which:

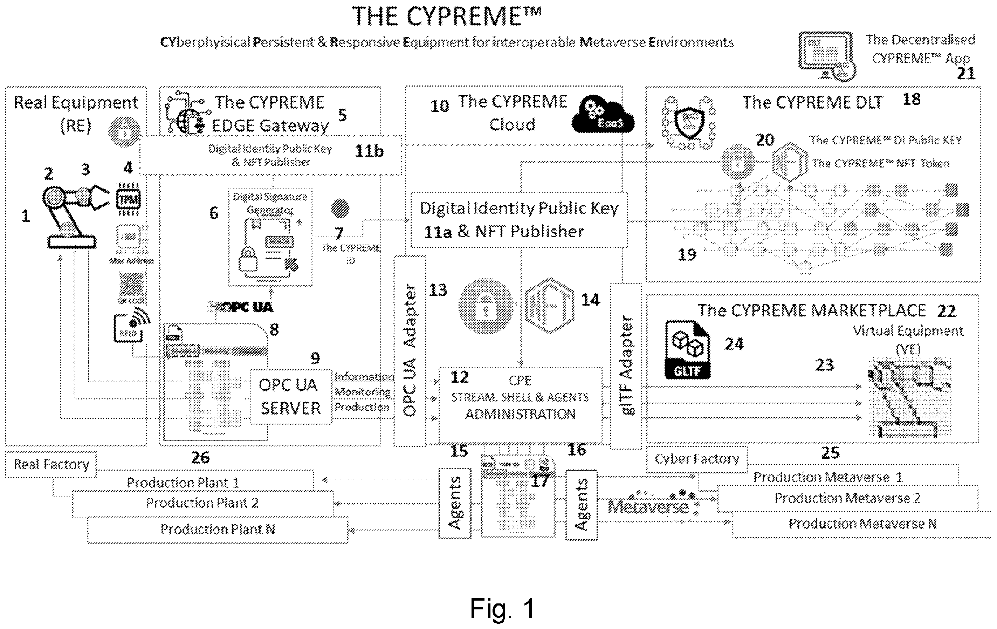

Figure 1 illustrates a schematic representation of the architecture of the system necessary to implement the "THE CYPREME" method.

In detail, Figure 1 illustrates an embodiment of a CPE represented by a robotic arm 1 equipped with internal 2 and external 3 sensors that communicate with proprietary formats and protocols with their command and control components usually operating in local and closed networks.

In order to be able to transform it into a CPE responding to the method that is intended to be patented in this application, it is first necessary to perform the provisioning thereof by univocally identifying the physical object involved in the transformation, and exposing its data in a univocal, secure, standard and interoperable format.

According to the embodiment highlighted in Figure 1, this operation is carried out by THE CYPREME EDGE GATEWAY (5, an edge computer operating locally capable of interfacing with the real model of the CPE (RE) according to the proprietary protocols supported by it and of using an algorithm to read the root of trust associated with the twin RE of the CPE for example by means of a physical TPM chip or, alternatively in case of retrofitting of the equipment, by generating this code from univocal data natively present on board the CPE RE such as for example the univocal number associated with HW cards inserted in the CPE RE (MAC ADDRESS) or other univocal parameters exposed by the twin RE of the CPE itself to generate a private key serving as a univocal and secure digital identifier of RE 7 called THE CYPREME DI (Digital Identity). According to the embodiment highlighted in Figure 1, once this DI associated with the RE component of the CPE is generated, it is associated with a public key in a double-key authentication encryption mechanism and the relative public key is transmitted to the cloud component of THE CYPREME CLOUD 10 platform which proceeds to publish it through the Digital Identity Publisher function 11a on a blockchain-type network with a GAD (Direct Acyclic Graph) structure 19 called THE CYPREME DLT 18 capable of also generating, if optionally requested as a service, a proprietary non-fungible univocal token, called THE CYPREME NFT 20, automatically associating it with the CPE ID.

In an alternative embodiment, the DI identifier is published directly on THE CYPREME DLT by the CYPREME EDGE GATEWAY without going through the cloud with the Digital Identity Public Key & NFT Publisher algorithm implemented on Edge or directly on IoT device 11b.

Once generated in one of the provided ways, the ID and NFT remain univocally and perpetually associated with the property of the CPE both in its physical RE version thanks to the association with the private key of the ID retained in the RE model of the CPE and in its digital or VE 23 version in the ways that we will define later and can be verified, transacted and managed through Smart Contracts interacting with the "THE CYPREME DLT"

To complete the coupling of the CPE RE model to THE CYPREME method, it is also necessary to couple the data flow that in the implementation represented in Figure 1 takes place using the standard OPC UA 8 semantic ontology that the gateway constructs and exposes as an OPC UA 9 server in its downstream components "Information" and "Monitoring" reflecting respectively the data and machine states received from the CPE RE.

The coupling of the virtual component of the CPE or VE 23 takes place using a standard descriptive semantic formalism for 3D representations and animations represented in the implementation represented in Figure 1 by the gITF 24 formalism recently released by KRONOS GROUP. In this formalism, in addition to a semantic standardization of typical characteristics of 3D models related to textures (meshes), light (lighting) and other virtual representation characteristics (rendering) of the virtual VE twin, representative ontologies of context structures are elicited that describe the relative animations and interactions between parts of the virtual model and/or interactions with the environment that thus become drivable by external data flows. In the proposed method, the use of such a formalism for the virtual CPE VE allows it to be constantly aligned to the data flow and machine states received from the CPE RE and managed by THE CYPREME cloud component that re-exposes them with a series of drivers and adapters capable of reading and writing data through an OPC client interfaced with the CPE RE 13 and through a gITF client on the CPE VE 14 side.

The authentication, the authorization and the orchestration of these drivers and adapters as well as all the information necessary to align the two worlds will be guaranteed by the CPE STREAM, SHELL & AGENTS ADMINISTRATION 12 function available on THE CYPREME Cloud capable of generating interoperable batch information packages (THE CYPREME Shells, 17) and software agents (THE CYPREME Agents, 15 and 16) managed by THE CYPREME cloud that will take care of keeping the two CPE RE and VE models aligned using both batch and streaming formalisms by implementing THE CYPREME method through the protocols, formats and mechanisms according to the exemplary embodiment represented in Figure 1. Alternatively, the interoperable batch information packages (THE CYPREME Shells, 17) can end up on a distributed file system and the corresponding access key saved on THE CYPREME DLT.

All the CPEs generated with the method set forth in the patent will therefore be uploadable by interchanging packages called THE CYPREME SHELL loaded on the central cloud or on a distributed file system and interchangeable in a virtual market that can be represented in the various Metaverses called THE CYPREME MARKETPLACE 22 which will be accessible by CPE manufacturers interested in exposing their equipment and services to third parties and by users interested in purchasing them through smart contracts in cryptocurrencies to integrate them into their processes and virtual 25 and/or real 26 environments. The proprietary data and the public key to access the CPE will also be made available to third parties authorised to verify data on the functioning, operation and performance of the equipment both in the real twin of the CPE RE and in the virtual counterpart VE through a decentralised App 21 that may access THE CYPREME DLT to certify data (e.g. anomalies, malfunctions, production outcome, hours of use, etc.) and possibly offer technical services (e.g. predictive maintenance, quality inspection, parametric insurance policies, modular financial payments, legal checks and in any case value-added services possibly using smart algorithms for the performance of the service levels offered.

While the invention is susceptible to various modifications and alternative constructions, some preferred embodiments have been shown in the drawings and described in detail in the present patent application.

It should be understood, however, that there is no intention to limit the invention to the specific illustrated embodiments but, on the contrary, it aims at covering all the modifications, alternative constructions and equivalents falling within the scope of the invention as defined in the claims.

## Claims

1. Method for sharing one or more cyber physical assets and/or equipment, which cyber physical assets and/or equipment consist of at least one real object and at least one virtual representation thereof in connection with each other,
wherein
the connection between the real object and its virtual representation is made through the use of a real semantic twin, consisting of a semantic representation of the real object, and of a virtual semantic twin, consisting of a semantic representation of the virtual representation, the real semantic twin and the virtual semantic twin being adapted to represent respectively the state and the operational data of the real object and of its virtual representation, in such a way that said cyber physical assets and/or equipment are univocally identifiable, transposable and interoperable between real worlds and one or more metaverses maintaining in the transposition univocal characteristics of identity, property, persistence and responsiveness between real object and virtual representation,
**characterized in that**
a connection of control parameters of the virtual semantic twin to the control data of one or more IoT sensors and/or actuators present in the real object and made accessible by the real semantic twin is provided.

2. Method according to claim 1, wherein said control parameters of the virtual semantic twin are control parameters of animations and/or state and/or environmental and operational context.

3. Method according to claim 1 or 2, wherein the univocal and interchangeable identification of the real and virtual semantic twins of a cyber physical asset or equipment is carried out by using a digital identity method self-managed by the cyber physical asset or equipment itself, which digital identity method comprises a security double key encryption mechanism in which the private key is obtained by securely exposing a hardware or firmware Root of Trust, to guarantee the possibility of univocal, natively secure and reliable identification of the cyber physical asset or equipment.

4. Method according to claim 3, wherein said private key consists of a univocal HW key inserted in one or more microcontrollers physically engaged in the real object and not disconnectable therefrom or emulated on an FPGA or a microcontroller present in the real object in such a way that the private key is accessible and securely exposed both in the real semantic twin and in the virtual semantic twin.

5. Method according to claim 3 or 4, wherein the univocal identification and the property of the cyber physical asset or equipment is recorded and managed in decentralized mode without the presence of centralizing enabling and synchronizing authority of the method, by recording the public key of said security double key encryption mechanism in a distributed DLT.

6. Method according to claim 5, wherein said distributed DLT is used for recording a proprietary Non Fungible Token associated with the public key of the cyber physical asset or equipment, which Non Fungible Token is able to univocally confirm the property of the cyber physical asset or equipment also in pre-existing international circuits and transactions using NFT.

7. Method according to one or more of the preceding claims, wherein said digital identity method and said DLT are used to implement methods for verification, access and provisioning of digital services, capable of providing a plurality of mechanisms adapted to demonstrate the property and the control of the cyber physical asset or equipment to those who intend to offer a service to the cyber physical asset or equipment and adapted to enable reliable interactions to the cyber physical asset or equipment both in the real world and in one or more of said Metaverses in which the cyber physical asset or equipment is operating, in order to offer value-added services for the interlinked cyber physical assets or equipment, and wherein the data certified by said DLT are also accessible by one or more distributed applications to verify and certify the operating data of both the real semantic twin in the real world and of the virtual semantic twin in the Metaverse.

8. Method according to claim 7, wherein the services provided are closely correlated to the univocally identified cyber physical asset or equipment and are adapted to monitor and control the interactions of the cyber physical asset or equipment both in the real world and in the Metaverse and possibly to formalise and transact the services using Smart Contracts and cryptocurrencies connected to said DLT.

9. Method according to claim 7 or 8, wherein the interactions with the real semantic twin and the virtual semantic twin necessary to provide said services are carried out by an automatic coupling of said semantic twins by means of schemes, interfaces and information communication protocols between the real world and the Metaverses in which the real semantic twin and the virtual semantic twin are used and/or immersed.

10. Method according to claim 9, wherein said coupling between the real semantic twin and the virtual semantic twin is obtained by maintaining the persistence and responsiveness requirements of the method by means of said connection of control parameters of the virtual semantic twin to the control data of said one or more IoT sensors and/or actuators.

11. Method according to one or more of the preceding claims, wherein the coupling between the real semantic twin and the virtual semantic twin is carried out through the interchange of data packets describing the cyber physical asset or equipment saved on a central cloud or on a distributed file system with access key saved on a distributed DLT and which data packets are open and interoperable in such a way as to guarantee the loading, the activation and the interoperability among different compatible software and used to manage the cyber physical assets and/or equipment in the real worlds and in the Metaverses compatible with the format and the protocols included in said data packets.

## Patentansprüche

1. Verfahren zum gemeinsamen Nutzen eines oder mehrerer cyberphysischer Assets und/oder Geräte, wobei diese cyber-physischen Assets und/oder Geräte aus mindestens einem realen Objekt und mindestens einer damit verbundenen virtuellen Darstellung desselben bestehen,
wobei die Verbindung zwischen dem realen Objekt und seiner virtuellen Darstellung durch die Verwendung eines realen semantischen Zwillings, bestehend aus einer semantischen Darstellung des realen Objekts, und eines virtuellen semantischen Zwillings, bestehend aus einer semantischen Darstellung der virtuellen Darstellung, hergestellt wird, wobei der reale semantische Zwilling und der virtuelle semantische Zwilling so ausgelegt sind, dass sie jeweils den Zustand und die Betriebsdaten des realen Objekts und seiner virtuellen Darstellung darstellen, und zwar derart, dass die genannten cyber-physischen Assets und/oder Geräte eindeutig identifizierbar, übertragbar und zwischen der realen Welt und einem oder mehreren Metaversen interoperabel sind, wobei bei der Übertragung eindeutige Merkmale hinsichtlich Identität, Eigenschaft, Persistenz und Reaktionsfähigkeit zwischen realem Objekt und virtueller Darstellung, **dadurch gekennzeichnet, dass** eine Verbindung von Steuerparametern des virtuellen semantischen Zwillings mit den Steuerdaten eines oder mehrerer IoT-Sensoren und/oder Aktoren bereitgestellt wird, die im realen Objekt vorhanden sind und durch den realen semantischen Zwilling zugänglich gemacht werden.

2. Verfahren nach Anspruch 1, wobei die genannten Steuerparameter des virtuellen semantischen Zwillings Steuerparameter von Animationen und/oder Zustand und/oder Umgebungs- und Betriebskontext sind.

3. Verfahren nach Anspruch 1 oder 2, wobei die eindeutige und austauschbare Identifizierung des realen und des virtuellen semantischen Zwillings einer cyber-physischen Anlage oder Ausrüstung unter Verwendung eines digitalen Identitätsverfahrens erfolgt, das von der cyber-physischen Anlage oder Ausrüstung selbst verwaltet wird, wobei das digitale Identitätsverfahren einen Sicherheitsmechanismus mit doppelter Schlüsselverschlüsselung umfasst, bei dem der private Schlüssel durch die sichere Offenlegung einer Hardware- oder Firmware-Root-of-Trust gewonnen wird, um die Möglichkeit einer eindeutigen, nativ sichere und zuverlässige Identifizierung des cyber-physischen Assets oder der Anlage gewährleistet wird.

4. Verfahren nach Anspruch 3, wobei der private Schlüssel aus einem eindeutigen HW-Schlüssel besteht, der in einen oder mehrere Mikrocontroller eingebettet ist, die physisch mit dem realen Objekt verbunden und nicht davon trennbar sind, oder auf einem FPGA oder einem im realen Objekt vorhandenen Mikrocontroller emuliert wird, und zwar derart, dass der private Schlüssel sowohl im realen semantischen Zwilling als auch im virtuellen semantischen Zwilling zugänglich ist und sicher offengelegt wird.

5. Verfahren nach Anspruch 3 oder 4, wobei die eindeutige Identifizierung und die Eigenschaften des cyber-physischen Vermögenswerts oder der Ausrüstung dezentral erfasst und verwaltet werden, ohne dass eine zentralisierende, aktivierende und synchronisierende Instanz des Verfahrens vorhanden ist, indem der öffentliche Schlüssel des genannten Sicherheits-Doppelschlüssel-Verschlüsselungsmechanismus in einer verteilten DLT gespeichert wird.

6. Verfahren nach Anspruch 5, wobei die verteilte DLT zur Aufzeichnung eines proprietären nicht fungiblen Tokens (NFT) verwendet wird, das mit dem öffentlichen Schlüssel des cyber-physischen Vermögenswerts oder der Ausrüstung verknüpft ist, wobei dieses NFT in der Lage ist, das Eigentum an dem cyber-physischen Vermögenswert oder der Ausrüstung auch in bereits bestehenden internationalen Kreisläufen und Transaktionen unter Verwendung von NFT eindeutig zu bestätigen.

7. Verfahren nach einem oder mehreren der vorstehenden Ansprüche, wobei das digitale Identitätsverfahren und die DLT verwendet werden, um Verfahren zur Verifizierung, Zugriff und Bereitstellung digitaler Dienste, die in der Lage sind, eine Vielzahl von Mechanismen bereitzustellen, die dazu ausgelegt sind, das Eigentum und die Kontrolle über das cyber-physische Asset oder die Ausrüstung gegenüber denjenigen nachzuweisen, die beabsichtigen, eine Dienstleistung für das cyber-physische Asset oder die Ausrüstung anzubieten, und die dazu ausgelegt sind, zuverlässige Interaktionen mit dem cyber-physischen Asset oder der Ausrüstung sowohl in der realen Welt als auch in einem oder mehreren der Metaversen zu ermöglichen, in denen das cyber-physische Asset oder die Ausrüstung betrieben wird, um Mehrwertdienste für die miteinander vernetzten cyber-physischen Vermögenswerte oder Geräte anzubieten, und wobei die durch die DLT zertifizierten Daten auch für eine oder mehrere verteilte Anwendungen zugänglich sind, um die Betriebsdaten sowohl des realen semantischen Zwillings in der realen Welt als auch des virtuellen semantischen Zwillings im Metaversum zu verifizieren und zu zertifizieren.

8. Verfahren nach Anspruch 7, wobei die bereitgestellten Dienste eng mit dem eindeutig identifizierten cyber-physischen Asset oder der Ausrüstung korrelieren und dazu ausgelegt sind, die Interaktionen des cyber-physischen Assets oder der Ausrüstung sowohl in der realen Welt als auch im Metaversum zu überwachen und zu steuern sowie gegebenenfalls die Dienste unter Verwendung von Smart Contracts und Kryptowährungen, die mit der genannten DLT verbunden sind, zu formalisieren und abzuwickeln.

9. Verfahren nach Anspruch 7 oder 8, wobei die zur Erbringung der genannten Dienste erforderlichen Interaktionen mit dem realen semantischen Zwilling und dem virtuellen semantischen Zwilling durch eine automatische Kopplung der genannten semantischen Zwillinge mittels Schemata, Schnittstellen und Informationskommunikationsprotokollen zwischen der realen Welt und den Metaversen erfolgen, in denen der reale semantische Zwilling und der virtuelle semantische Zwilling verwendet und/oder eingebettet sind.

10. Verfahren nach Anspruch 9, wobei die Kopplung zwischen dem realen semantischen Zwilling und dem virtuellen semantischen Zwilling dadurch erreicht wird, dass die Anforderungen an Persistenz und Reaktionsfähigkeit des Verfahrens durch die Verbindung von Steuerparametern des virtuellen semantischen Zwillings mit den Steuerdaten des einen oder der mehreren IoT-Sensoren und/oder Aktoren aufrechterhalten werden.

11. Verfahren nach einem oder mehreren der vorstehenden Ansprüche, wobei die Kopplung zwischen dem realen semantischen Zwilling und dem virtuellen semantischen Zwilling durch den Austausch von Datenpaketen erfolgt, die das cyber-physische Asset oder die Ausrüstung beschreiben, die auf einer zentralen Cloud oder einem verteilten Dateisystem gespeichert sind, wobei der Zugriffsschlüssel auf einer verteilten DLT gespeichert ist und wobei diese Datenpakete offen und interoperabel sind, um das Laden, die Aktivierung und die Interoperabilität zwischen verschiedenen kompatiblen Softwareprogrammen gewährleistet ist, die zur Verwaltung der cyber-physischen Anlagen und/oder Geräte in der realen Welt und in den Metaversen verwendet werden, die mit dem Format und den in den genannten Datenpaketen enthaltenen Protokollen kompatibel sind.

## Revendications

1. Procédé de partage d'un ou plusieurs biens et/ou équipements cyber-physiques, lesquels biens et/ou équipements cyber-physiques se composent d'au moins un objet réel et d'au moins une représentation virtuelle de celui-ci en relation l'un avec l'autre,
dans lequel la relation entre l'objet réel et sa représentation virtuelle est établie par l'utilisation d'un jumeau sémantique réel, consistant en une représentation sémantique de l'objet réel, et d'un jumeau sémantique virtuel, consistant en une représentation sémantique de la représentation virtuelle, le jumeau sémantique réel et le jumeau sémantique virtuel étant adaptés pour représenter respectivement l'état et les données opérationnelles de l'objet réel et de sa représentation virtuelle, de telle sorte que lesdits biens et/ou équipements cyber-physiques soient identifiables de manière univoque, transposables et interopérables entre les mondes réels et un ou plusieurs métavers, en conservant lors de la transposition les caractéristiques univoques d'identité, de propriété, de persistance et de réactivité entre l'objet réel et la représentation virtuelle, **caractérisé en ce qu'**une connexion des paramètres de contrôle du jumeau sémantique virtuel aux données de contrôle d'un ou plusieurs capteurs et/ou actionneurs IoT présents dans l'objet réel et rendus accessibles par le jumeau sémantique réel est fournie.

2. Procédé selon la revendication 1, dans lequel lesdits paramètres de contrôle du jumeau sémantique virtuel sont des paramètres de contrôle d'animations et/ou d'état et/ou de contexte environnemental et opérationnel.

3. Procédé selon la revendication 1 ou 2, dans lequel l'identification univoque et interchangeable des jumeaux sémantiques réels et virtuels d'un bien ou d'un équipement cyber-physique est réalisée en utilisant une méthode d'identité numérique autogérée par le bien ou l'équipement cyber-physique lui-même, laquelle méthode d'identité numérique comprend un mécanisme de chiffrement à double clé de sécurité dans lequel la clé privée est obtenue en exposant de manière sécurisée une racine de confiance matérielle ou micrologicielle, afin de garantir la possibilité d'une identification univoque, nativement sécurisée et fiable de l'actif ou de l'équipement cyber-physique.

4. Procédé selon la revendication 3, dans lequel ladite clé privée consiste en une clé matérielle univoque insérée dans un ou plusieurs microcontrôleurs physiquement intégrés à l'objet réel et ne pouvant en être déconnectés, ou émulée sur un FPGA ou un microcontrôleur présent dans l'objet réel de telle sorte que la clé privée soit accessible et exposée de manière sécurisée à la fois dans le jumeau sémantique réel et dans le jumeau sémantique virtuel.

5. Procédé selon la revendication 3 ou 4, dans lequel l'identification univoque et la propriété de l'actif ou de l'équipement cyber-physique sont enregistrées et gérées en mode décentralisé sans la présence d'une autorité centralisatrice d'activation et de synchronisation du procédé, en enregistrant la clé publique dudit mécanisme de chiffrement à double clé de sécurité dans une DLT distribuée.

6. Procédé selon la revendication 5, dans lequel ladite DLT distribuée est utilisée pour enregistrer un jeton non fongible (NFT) propriétaire associé à la clé publique du bien ou de l'équipement cyber-physique, lequel jeton non fongible est capable de confirmer de manière univoque la propriété du bien ou de l'équipement cyber-physique également dans des circuits et transactions internationaux préexistants utilisant des NFT.

7. Procédé selon une ou plusieurs des revendications précédentes, dans lequel ledit procédé d'identité numérique et ladite DLT sont utilisés pour mettre en oeuvre des méthodes de vérification, d'accès et de fourniture de services numériques, capables de fournir une pluralité de mécanismes adaptés pour démontrer la propriété et le contrôle du bien ou de l'équipement cyber-physique à ceux qui ont l'intention d'offrir un service au bien ou à l'équipement cyber-physique et adaptés pour permettre des interactions fiables avec le bien ou l'équipement cyber-physique tant dans le monde réel que dans un ou plusieurs desdits métavers dans lesquels le bien ou l'équipement cyber-physique opère, afin d'offrir des services à valeur ajoutée pour les actifs ou équipements cyber-physiques interconnectés, et dans lequel les données certifiées par ladite DLT sont également accessibles par une ou plusieurs applications distribuées pour vérifier et certifier les données d'exploitation à la fois du jumeau sémantique réel dans le monde réel et du jumeau sémantique virtuel dans le métaverse.

8. Procédé selon la revendication 7, dans lequel les services fournis sont étroitement corrélés au bien ou équipement cyberphysique identifié de manière univoque et sont adaptés pour surveiller et contrôler les interactions du bien ou équipement cyberphysique tant dans le monde réel que dans le métaverse, et éventuellement pour formaliser et exécuter les services à l'aide de contrats intelligents et de cryptomonnaies connectés à ladite DLT.

9. Procédé selon la revendication 7 ou 8, dans lequel les interactions avec le jumeau sémantique réel et le jumeau sémantique virtuel nécessaires pour fournir lesdits services sont réalisées par un couplage automatique desdits jumeaux sémantiques au moyen de schémas, d'interfaces et de protocoles de communication d'informations entre le monde réel et les métavers dans lesquels le jumeau sémantique réel et le jumeau sémantique virtuel sont utilisés et/ou immergés.

10. Procédé selon la revendication 9, dans lequel ledit couplage entre le jumeau sémantique réel et le jumeau sémantique virtuel est obtenu en maintenant les exigences de persistance et de réactivité du procédé au moyen de ladite connexion des paramètres de contrôle du jumeau sémantique virtuel aux données de contrôle dudit ou desdits capteurs et/ou actionneurs IoT.

11. Procédé selon l'une ou plusieurs des revendications précédentes, dans lequel le couplage entre le jumeau sémantique réel et le jumeau sémantique virtuel est réalisé par l'échange de paquets de données décrivant le bien ou l'équipement cyber-physique, enregistrés sur un cloud central ou sur un système de fichiers distribué avec une clé d'accès enregistrée sur une DLT distribuée, et lesquels paquets de données sont ouverts et interopérables de manière à garantir le chargement, l'activation et l'interopérabilité entre différents logiciels compatibles et utilisés pour gérer les actifs cyber-physiques et/ou les équipements dans les mondes réels et dans les métavers compatibles avec le format et les protocoles inclus dans lesdits paquets de données.
